# EUROPÄISCHE PATENTSCHRIFT

(11) **EP 2 307 264 B1**
(45) Veröffentlichungstag und Bekanntmachung des Hinweises auf die Patenterteilung: **04.11.2015**
(21) Anmeldenummer: 09777230.5
(22) Anmeldetag: 16.07.2009
(51) Int. Cl.: B62D 65/18, B65G 35/06, B65G 25/06

(54) **TRANSPORTEINRICHTUNG**
TRANSPORT DEVICE
DISPOSITIF DE TRANSPORT

(30) Priorität: 30.07.2008 DE 202008010202 U
(43) Veröffentlichungstag der Anmeldung: 13.04.2011
(73) Patentinhaber: KUKA Systems GmbH, 86165 Augsburg (DE)
(72) Erfinder: MAISCHBERGER, Johann, 86424 Dinkelscherben (DE)
(74) Vertreter: Ernicke, Klaus Stefan
(86) Internationale Anmeldenummer: PCT/EP2009/005168
(87) Internationale Veröffentlichungsnummer: WO 2010/012385

(56) Entgegenhaltungen:
- EP-A- 1 020 347
- WO-A-00/26121
- DE-U1-202004 002 729
- FR-A- 2 888 812
- JP-A- 11 000 834
- JP-A- 60 040 311
- JP-A- 60 221 229
- JP-A- 2003 341 566

## Beschreibung

Die Erfindung betrifft eine Transporteinrichtung mit den Merkmalen im Oberbegriff des Hauptanspruchs, sowie eine Bearbeitungsanlage und ein Verfahren nach dem Oberbegriff der Ansprüche 12 und 14.

Aus der Praxis sind Shuttle-Förderer bekannt, die aus einem langen Träger aus einem Einzelholm oder einem Holmpaar mit mehreren Werkstückaufnahmen bestehen, der von einem Antrieb in einer kreisartigen Bewegung vorwärts und rückwärts bewegt sowie angehoben und abgesenkt werden kann. In angehobener Stellung nimmt der Träger eine Reihe von Werkstücken auf und transportiert sie einen Schritt oder eine Station weiter, wo er sie in einer Senkbewegung auf stationären Aufnahmen absetzt und anschließend in seine Ausgangslage zurückkehrt und für den nächsten Transportschritt wieder angehoben und vorwärts bewegt wird. Derartige Shuttle-Förderer haben eine gewisse Trägheit, brauchen wegen der Masse starke Antriebe und sind in ihrer Förderleistung beschränkt. Außerdem ist die Positioniergenauigkeit nicht optimal.

Aus JP 60221229 ist eine gattungsgemäße Transporteinrichtung bekannt.

Es ist Aufgabe der vorliegenden Erfindung, eine bessere Transporteinrichtung für den schrittweisen Werkstücktransport aufzuzeigen.

Die Erfindung löst diese Aufgabe mit den Merkmalen im Hauptanspruch.

Die beanspruchte Transporttechnik hat durch die modulare Unterteilung der Transporteinrichtung in mehrere autonome Transporteinheiten den Vorteil, dass die Geschwindigkeit und Leistungsfähigkeit deutlich erhöht werden kann. Insbesondere erlaubt die Trennung von Förderer und Hubeinrichtung eine gegenseitige Überschneidung der Bewegungen und damit eine größere

Transportgeschwindigkeit. Die einzelnen Förderer können durch die Massenreduzierung außerdem die Werkstücke schneller beschleunigen und vorwärts bewegen. Der Anteil der Transportzeit an der Taktzeit kann dadurch zu Gunsten eines größeren Prozesszeitanteils signifikant verringert werden.

Günstig ist außerdem, dass die effektiven Hübe zum Lösen der Werkstücke vom Förderer und zum Zurücksetzen der Werkstücke auf den nächsten Förderer sehr klein sein können, was der Geschwindigkeit und dem verringerten Bauaufwand zugute kommt. Die Hubeinrichtung kann zugleich die Positioniereinrichtung für die Werkstücke sein. Dies bietet höhere Positioniergenauigkeiten als ein konventionelles Hubshuttle. Auch die Positionierzeiten für die Werkstücke können deutlich verringert werden.

Die Verringerung der Hübe der Transporteinrichtung hat ferner den Vorteil, dass andere Komponenten in der Station schneller zustellen und arbeiten können. Dies betrifft insbesondere Spanneinrichtungen, welche die Werkstücke in der Positions- und Hubstellung schneller spannen können. Auch dies kommt einem vergrößerten Prozesszeitenanteil an der Taktzeit zugute.

Die verfügbare Taktzeit lässt sich besser und wirtschaftlicher für die wertschöpfenden Prozesse, insbesondere Bearbeitungs-, Handhabungs- oder Behandlungsprozeese ausnutzen. Die Prozesseinrichtungen, z.B. Bearbeitungseinrichtungen in den Stationen einer Anlage, können besser und wirtschaftlicher ausgelastet werden, wobei ggf. hierdurch der apparative Aufwand und z.B. die Stationszahl verringert werden kann.

Vorteilhafterweise ist bei evtl. Störungen in einer Station die Transporteinrichtung nicht mehr wie beim Stand der Technik in ihrer Gesamtheit blockiert. Durch die Aufteilung der erfindungsgemäßen Transporteinrichtung in mehrere eigenständige Transporteinheiten können die in Förderrichtung hinter der Störungsstelle liegenden Transporteinheiten und Stationen immer noch arbeiten. Die beanspruchte Transporteinrichtung ist dadurch insgesamt besonders wirtschaftlich.

Die beanspruchte Transporteinrichtung ist hochflexibel. Die Transporteinrichtungen arbeiten zwar in einem Takt-Konzept mit gegenseitiger Abstimmung. Hierbei sind allerdings gewisse Abweichungen möglich. Es müssen nicht alle Transporteinheiten zum exakt gleichen Zeitpunkt die Werkstücke aufnehmen, transportieren und absetzen.

Die Störanfälligkeit der Transporteinrichtung wird verringert. Bei einem konventionellen Shuttle-Förderer führt eine Störung zum Ausfall des kompletten Förderers und aller von ihm bedienten Stationen. Bei der beanspruchten modularen Transporteinrichtung können die stromabwärts gelegenen Transporteinheiten und Stationen weiterarbeiten.

Vorteilhafterweise ist die Transporteinrichtung hinsichtlich der Art und Beförderung der Werkstücke hochflexibel. Die Werkstücke können direkt von einem Transportelement des Förderers, z.B. einem Schlitten, aufgenommen und im Vorschub transportiert werden. Alternativ können die Werkstücke auf Werkstückträgern angeordnet werden, die mit den Transportelementen in Eingriff treten. Diese Werkstückträger können unterschiedlich ausgebildet sein, z.B. als Palette, Stützbügel oder dgl.

Die Vorschubbewegung und die Hubbewegung können in ihrem Weg, in der Zeit und in ihrer Geschwindigkeit veränderlich sein und sich an die jeweiligen Erfordernisse anpassen. Hierbei können gerade oder gekrümmte Gradienten gefahren werden. Die Hub- und Vorschubbewegung kann über eine geeignete und bevorzugt gemeinsame Steuerung abgestimmt werden, wobei eine Kollisionsfreiheit bei der Vorschub- und Hubbewegung sichergestellt werden kann. Die Hubbewegung kann außerdem auf die Vorschubbewegung abgestimmt werden und z.B. vom aktuellen Vorschubweg abhängen. Hierfür kann eine geeignete Messeinrichtung vorhanden sein, die auch mehrere Komponenten haben kann. Hierdurch lassen sich außerdem die Vorschub- und Hubbewegung überwachen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 und 2:: eine Seitenansicht und eine Draufsicht einer Bearbeitungsanlage mit mehreren Stationen und einer modularen Transporteinrichtung,
- Figur 3 und 4:: eine abgebrochene und vergrößerte Seitenansicht und Draufsicht eines Förderers einer Transporteinheit,
- Figur 5:: eine Stirnansicht der Fördereinrichtung gemäß Pfeil V von Figur 2,
- Figur 6:: eine vergrößerte Seitenansicht einer Koppeleinrichtung und eines Teils des Förderers mit verschiedenen Hubstellungen eines Stützbügels,
- Figur 7 und 8:: schematische Darstellungen der Verriegelungs- und Entriegelungsstellung der Koppeleinrichtung,
- Figur 9:: eine vergrößerte Seitenansicht eines Stützbügels und der Koppeleinheit mit Darstellung der Hubstellungen,
- Figur 10:: eine perspektivische Ansicht einer Fördereinrichtung mit Förderer und Hubeinrichtung mit Hubtisch und
- Figur 11:: eine vergrößerte Seitenansicht eines Teils des Förderers und der Hubeinrichtung mit verschiedenen Hubstellungen.

Die Erfindung betrifft eine Transporteinrichtung (7) sowie ein Verfahren zum schrittweisen Transport von Werkstücken (5). Die Erfindung betrifft ferner eine Anlage (1) mit mehreren Stationen (2,3,4), die mit einer solchen Transporteinrichtung (7) ausgerüstet ist.

Die Werkstücke (5) können von beliebiger Art, Form und Größe sein sowie aus beliebigen Werkstoffen bestehen. Im gezeigten Ausführungsbeispiel handelt es sich um Rohbaukarosserien oder Karosserieteile aus Metall oder Kunststoff für Fahrzeuge, insbesondere PKWs.

Die Werkstücke (5) oder Karosserieteile können selbsttragend sein. Alternativ können die Werkstücke (5) einen Werkstückträger (14) aufweisen, der die Werkstückteile aufnimmt und in einer vorgegebenen Stellung exakt positioniert sowie ggf. fixiert. Der Werkstückträger (14) kann in beliebig geeigneter Weise ausgebildet sein und z.B. aus einer Palette, einem Gerüst, einer Platte oder einem Rahmen bestehen. Der Werkstückträger (14) kann auch modular aufgebaut sein.

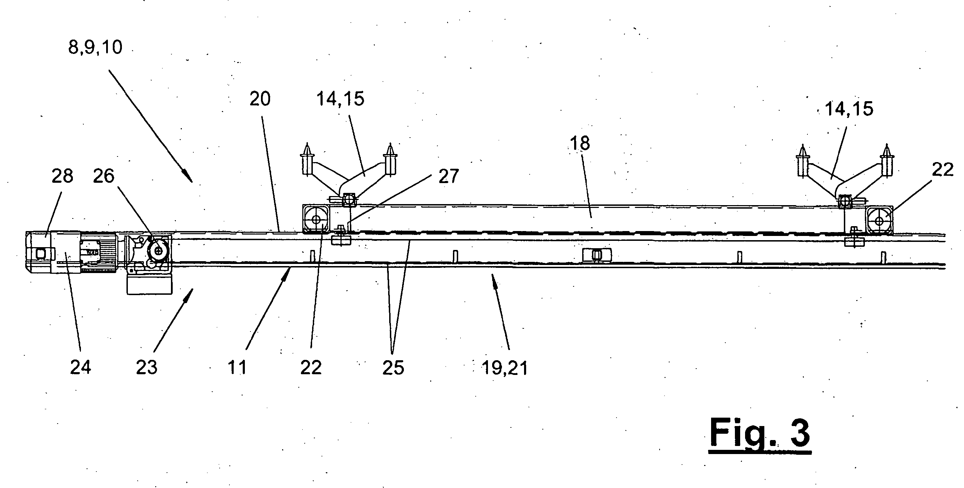

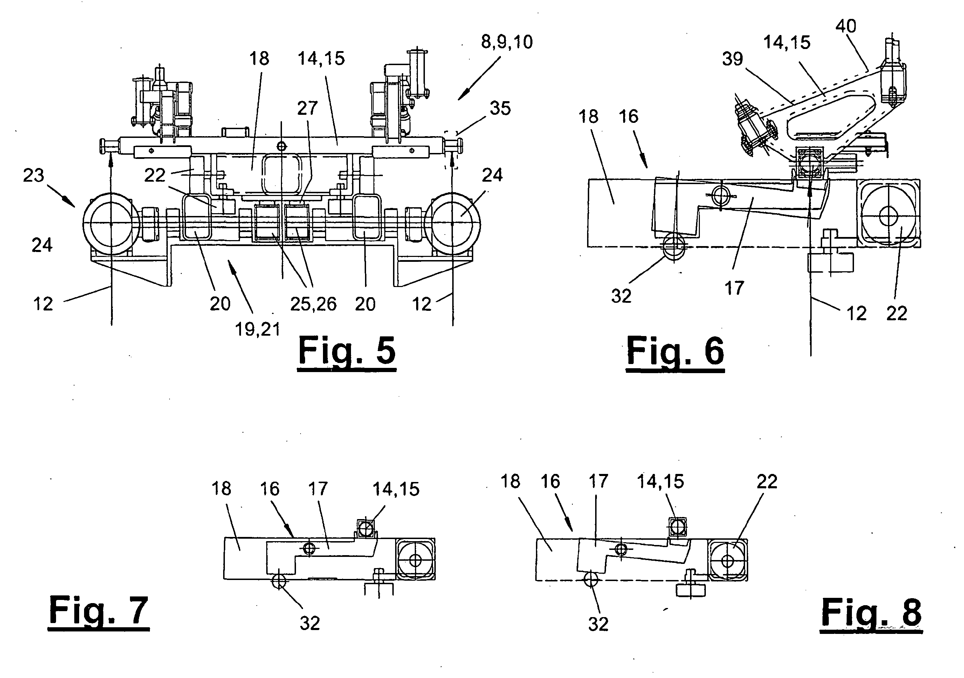

In den gezeigten Ausführungsbeispielen besteht der Werkstückträger (14) aus zwei oder mehr Stützbügeln (15), die mit dem Werkstück (5), z.B. einer Rohkarosserie, in geeigneter Weise verbunden und dort positioniert sind. Die Stützbügel (15) bilden z.B. querliegende Träger mit vier Aufnahmeelementen, z.B. Pins, die in Löcher am Karosserieboden eingreifen und dort verschraubt oder in anderer Weise fixiert sind. Das Werkstück (5) kann über solche Stützbügel (15) aufgenommen, abgestützt und transportiert werden. Figur 3 und 6 zeigen verschiedene Varianten hiervon.

Die Transporteinrichtung (7) ist modular aufgebaut und sorgt für einen schrittweisen oder stationsweisen Transport der Werkstücke (5) in Förderrichtung (13) mit einer Vorschub- und Hubbewegung. Die Werkstücke (5) werden in einer Schrittfolge und in einer Reihe gemeinsam durch die Stationen (2,3,4) bewegt. Sie führen dabei eine Bewegung ähnlich wie bei einem konventionellen Shuttle-System aus. Die Bewegung und die eingesetzte Fördertechnik und -kinematik sind im Detail allerdings anders als beim Stand der Technik. Die Werkstücke (5) werden beim Vorschub in Förderrichtung (13) vorwärts bewegt, am Vorschubende angehoben, vom Fördermittel gelöst und positioniert. Für den folgenden Transportschritt werden sie wieder abgesenkt und erneut vorgeschoben mit anschließender Hub- und Positionierbewegung.

Die modulare Transporteinrichtung (7) besteht aus einer Reihe von mehreren Transporteinheiten (8,9,10). Diese sind z.B. in einer fluchtenden Reihe in Förderrichtung (13) hintereinander angeordnet. Benachbarte Transporteinheiten (8,9,10) überlappen einander in den Stationen (2,3,4) in Förderrichtung (13) und haben im Überlappungsbereich gemeinsam bediente Aufnahme- und Abgabestellen (34) für die Werkstücke (5).

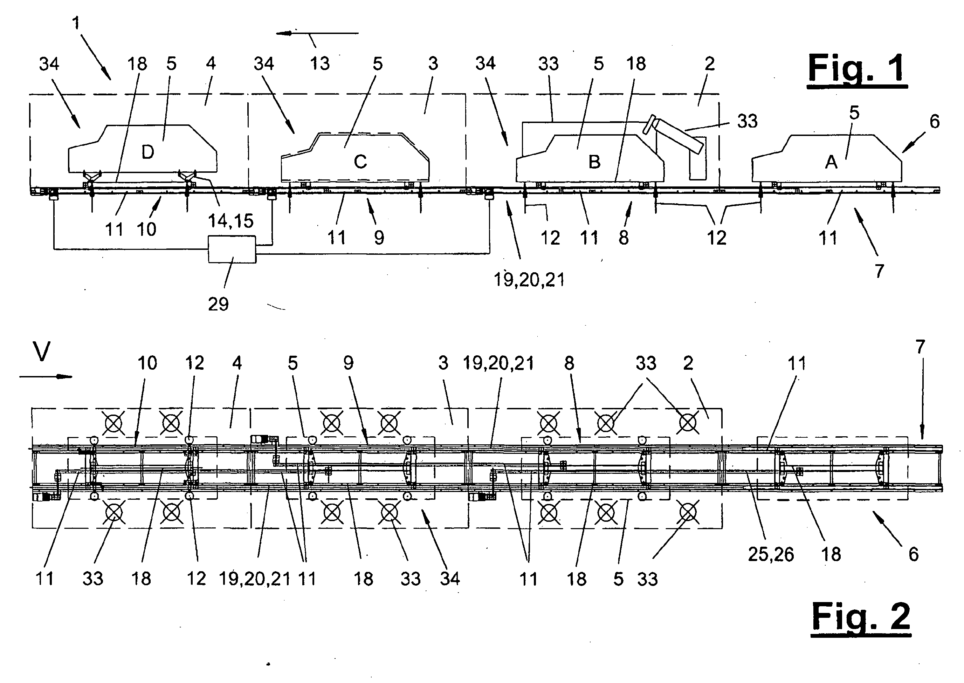

Die Anlage (1) und ihre Stationen (2,3,4) können in beliebig geeigneter Weise ausgebildet sein. Im gezeigten Ausführungsbeispiel handelt es sich um eine Bearbeitungsanlage (1) für die besagten Fahrzeugkarosserien (5). Die Stationen (2,3,4) sind Bearbeitungsstationen, in denen jeweils mindestens eine Bearbeitungseinrichtung (33) angeordnet ist, die in beliebig geeigneter Weise ausgebildet und angeordnet sein kann. In Figur 1 ist beispielhaft ein mehrachsiger Industrieroboter, z.B. ein Gelenkarmroboter mit einem Bearbeitungswerkzeug, z.B. einer Punktschweißzange, einer Klebepistole, einem Laserkopf zum Schweißen oder Schneiden oder dgl. dargestellt. Die Bearbeitungseinrichtung (33) kann auch eine Spanneinrichtung zum Spannen der Werkstückteile aufweisen, die in Figur 1 durch einen Rahmen hinter der Karosserie (5) symbolisiert ist.

Die gezeigten Bearbeitungsstationen (2,3,4) können z.B. Schweißstationen sein, wobei die erste Station (2) eine Framing-Station oder Geo-Station ist, in der die zunächst lose zugeführten oder mit ungenauer Positionierung geklammerten Karosseriebauteile in der fügegerechten Position gespannt und anschließend in geeigneter Weise, z.B. mit Schweißwerkzeugen, geheftet werden. In den nachfolgenden Stationen (3,4) kann die geheftete und fixierte Karosserie (5) weiter ausgeschweißt werden.

Alternativ können eine oder mehrere Stationen (2,3,4) andere Fügestationen oder sonstige Bearbeitungs- oder Behandlungsstationen sein, in denen andere Prozesse, insbesondere Fügeprozesse, Handhabungs-, Bearbeitungs- oder Behandlungsprozesse durchgeführt werden. Vor der ersten Station (2) kann eine Werkstückzuführung (6) angeordnet sein. Dies kann auch eine eigene Station in der Anlage (1) sein. Am Ende der Stationsreihe kann eine Abgabestation (nicht dargestellt) vorhanden sein.

Die Transporteinheiten (8,9,10) können untereinander gleichartig ausgebildet sein. Sie weisen für den Vorschub der Werkstücke (5) jeweils einen Förderer (11) auf, der eine Vorwärts- und Rückwärtsbewegung ausführen kann. Der Förderer kann reversierend sein. Die Transporteinheiten (8,9,10) umfassen ferner mindestens eine Hubeinrichtung (12) zum Bewegen, insbesondere Heben und Senken, der Werkstücke (5), die getrennt vom Förderer (11) angeordnet ist und eigenständig und unabhängig vom Förderer (11) auf die Werkstücke (5) einwirkt und diese am Ende des Vorschubs mit einer aktiven Hubbewegung vom Förderer (11) löst.

Der Förderer (11) kann dabei den Vorschub beendet haben und in Ruhe sein. Der Förderer (11) kann alternativ am Ende seiner Förderbewegung sein und z.B. bremsen oder auslaufen, wobei die restliche Förder- bzw. Vorschubbewegung und die Bewegung der Hubeinrichtung (12) einander zeitlich überschneiden. Die Hubeinrichtung (12) startet dabei während des Auslaufens der Förderbewegung und nähert sich der Übernahmestellung (43) bzw. der Transportstellung (39) der Werkstücks (5) an. Der Eingriff der Hubeinrichtung (12) am Werkstück (5) und/oder am Werkstückträger (14) und die Abnahme vom Förderer (11) erfolgen allerdings bevorzugt erst bei stehendem Werkstück (5) und/oder Werkstückträger (14) und bei Förderstillstand.

Im Gegensatz zu einem konventionellen Hubshuttle wirkt die separate Hubeinrichtung (12) nicht auf den Förderer (11) oder dessen Fördermittel, z.B. einen Förderbalken, ein, sondern greift direkt an den Werkstücken (5) an. Dies kann unmittelbar durch Kontakt am Werkstück (5) und/oder mittelbar über Angriff an einem mitbewegten Werkstückträger (14) erfolgen. Die Werkstücke (5) werden dabei ohne Mitnahme des Förderers (11) oder seines Förder- oder Transportmittels bewegt. Der Förderer (11) selbst braucht keine eigene Hubbewegung auszuführen und kann sich auf eine reversierende oder oszillierende, insbesondere einachsige Förderbewegung beschränken. Er kann hierfür unabhängig von der Hubeinrichtung (12) gelagert und z.B. stationär, insbesondere flurgebunden angeordnet sein.

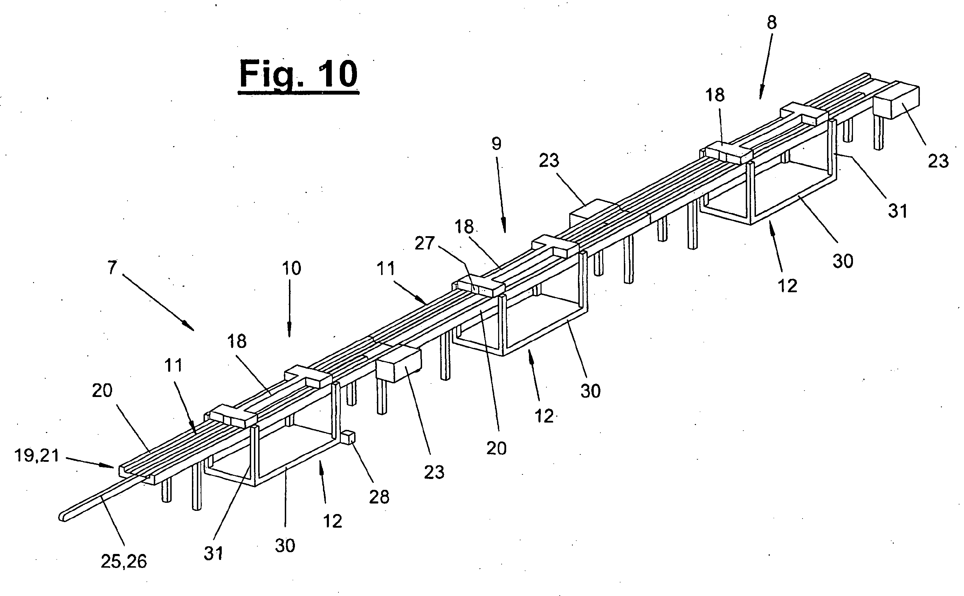

Im gezeigten Ausführungsbeispiel von Figur 1 und 2 sind die Transporteinheiten (8,9,10) flurgebunden und befinden sich auf dem Hallenboden unterhalb der Werkstücke (5). Figur 10 zeigt eine Variante mit einem untergebauten Gestell. Die flurgebundenen Förderer (11) führen eine zum Boden parallele und z.B. horizontale Vorwärts- und Rückwärtsbewegung aus. Die Hubeinrichtungen (12) können z.B. eine im wesentlichen vertikale Hebe- und Senkbewegung ausführen.

In Abwandlung der gezeigten Ausführungsform sind andere Kinematiken und andere räumliche Ausrichtungen der Förderer (11) und Hubeinrichtungen (12) und der Vorschub- und Hubbewegungen möglich. Diese können z.B. schräg ausgerichtet oder um 90° gedreht angeordnet sein. Der Förderer (11) kann auch als Hängeförderer mit einer Anordnung oberhalb der Werkstücke (5) ausgebildet sein. Der Förderer (11) kann in einer nicht dargestellten Variante die Werkstücke (5) ferner von oben oder seitlich halten, wobei die Hubeinrichtungen (12) dementsprechend eine Senkbewegung oder eine seitliche, insbesondere horizontale oder schräge Hubbewegung zum Lösen der Werkstücke (5) vom Förderer (11) ausführen kann.

Die Transporteinheiten (8,9,10) werden in gegenseitig abgestimmter Weise gesteuert, um miteinander einen schrittweisen oder stationsweisen Weitertransport der Werkstückreihe auszuführen. Die Transporteinheiten (8,9,10) sind allerdings untereinander eigenständig und müssen nicht exakt die gleichen Vorschub- und Hubbewegungen ausführen. Die Stationen (2,3,4) und die Transporteinrichtung (7) sind in einen Arbeitstakt eingebunden. Innerhalb des Taktes können die Transportbewegungen aller Transporteinheiten (8,9,10) gleichzeitig oder bei Bedarf mit gewissen Unterschieden ausgeführt werden. Die Transporteinheiten (8,9,10) können wie in Figur 1 an eine gemeinsame Steuerung (29) angeschlossen sein. Sie können alternativ eigene Steuerungen haben, die zur Abstimmung untereinander gekoppelt sind. In beiden Varianten kann eine Steuerverbindung mit einer übergeordneten Anlagen- und Ablaufsteuerung bestehen.

Jede Transporteinheit (8,9,10) weist mindestens einen Förderer (11) für den Vorschub der Werkstücke (5) auf. Ein solcher Förderer ist z.B. in Figur 3 bis 5 mit seinen Bestandteilen dargestellt. Der Förderer (11) weist ein Transportelement (18) für das Werkstück (5) oder einen Werkstückträger sowie eine Führung (19) und einen Antrieb (23) für das Transportelement (18) auf. Diese Bestandteile des Förderers (11) können in beliebig geeigneter Weise konstruktiv ausgebildet sein. Das Transportelement (18) führt eine reversierende einachsige Vorschub- und Rückfahrbewegung aus.

In den gezeigten Ausführungsbeispielen ist das Transportelement (18) als rahmenartiger Schlitten mit einem Laufwerk (22) ausgebildet, welches frei drehbare Stützrollen mit vertikaler und horizontaler Ausrichtung für den formschlüssigen Angriff an der Führung (19) aufweist. Die längs der Förderrichtung (13) ausgerichtete Führung (19) ist z.B. als Schienenanordnung (20) ausgebildet, auf der das Transportelement (18) rollt. Wie Figur 1 und 2 verdeutlichen, fluchten die Schienenanordnungen (20) benachbarter Transporteinheiten (8,9,10) miteinander und bilden eine durchgehende Führungs- oder Schienenbahn (21), die sich in Förderrichtung (13) durch die Stationen (2,3,4) erstreckt.

Der Antrieb (23) für das Transportelement (18) weist einen Motor (24) und ein reversierend bewegliches Antriebselement (25) auf, welches mit dem Transportelement (18) über eine Verbindung (27) gekuppelt ist. Der Antrieb (23) kann ebenfalls eine beliebig geeignete konstruktive Ausbildung haben. Im gezeigten Ausführungsbeispiel ist der Motor als steuerbarer Elektromotor ausgebildet, der ein Antriebselement (25) in Form eines Riemens antreibt. Der Riemen kann ein Flachriemen oder ein Zahnriemen für einen formschlüssigen Antrieb mit quer oder schräg liegenden Zähnen sein. Der Riemen ist mit einer Riemenführung (26) versehen und in einer geschlossenen Schleife über Umlenk- und Antriebsrollen geführt, wobei die Riemenenden in geeigneter Weise mit dem Transportelement (18) verbunden z.B. mit einer Schraubverbindung (27). Durch eine Dreh- oder Umlaufbewegung des Riemens wird der Schlitten (18) entsprechend der Motordrehung vorwärts und rückwärts bewegt. Der Motor (24) treibt den Riemen (25) und das Transportelement (18) reversierend an.

Wie Figur 1 und 2 verdeutlichen, sind bei benachbarten Transporteinheiten (8,9,10) die Förderer (11) und insbesondere deren Antriebselemente (25) bzw. Riemenführungen (26) seitlich versetzt nebeneinander und in Förderrichtung (13) mit Überlappung angeordnet. Die Verbindungen (27) sind entsprechend seitlich versetzt.

Durch diese Anordnung können die Transportelemente oder Schlitten (18) der in Längsrichtung benachbarten Förderer (11) abwechselnd an die Aufnahme- und Abgabestelle (34) in der bedienten Station (2,3,4) gebracht werden. Die Werkstücke (5) können dadurch von der einen Transporteinheit (8,9) zur Aufnahme- und Abgabestelle (34) gebracht und dort im nächsten Transportschritt von der anschließenden Transporteinheit (9,10) übernommen und um einen Schritt oder eine Station weiter transportiert werden. Dies setzt sich in der Reihe der Transporteinheiten (8,9,10) fort. Die reversierend vor- und zurückbewegten Transportelemente (18) bewegen sich dabei auf der gemeinsamen Führungs- oder Schienenbahn (21).

Aus Figur 2 ist außerdem ersichtlich, dass die Förderer (11) eine größere Länge als die Stationen (2,3,4) aufweisen und stationsübergreifend angeordnet sind. Die Länge der Förderer (11) kann z.B. das 1,5-fache der Stationslänge bzw. des Abstandes zwischen den Aufnahme- und Abgabestellen (34) in den Stationen (2,3,4) betragen. Die Förderer (11) können untereinander gleiche Längen haben. Es sind allerdings bereichsweise auch Abweichungen möglich.

Jede Transporteinheit (8,9,10) weist mindestens eine Hubeinrichtung (12) der vorgenannten Art auf. In den gezeigten Ausführungen sind bei jeder Transporteinheit (8,9,10) jeweils zwei Hubeinrichtungen (12) in den Stationen (2,3,4) und an den überlappten Endbereichen der Förderer (11) bzw. den dort gebildeten Aufnahme- und Abgabestellen (34) der Werkstücke (5) angeordnet. Die in Förderrichtung (13) distanzierten Hubeinrichtungen (12) greifen an den vorderen und hinteren Werkstückbereichen an. Die Hubeinrichtungen (12) sind stationär und neben dem oder den Förderern (11) angeordnet. Die Hubeinrichtungen (12) sind außerdem getrennt von den Förderern (11) beweglich und werden hierzu eigenständig gesteuert. Diese Steuerung kann in Abhängigkeit vom Vorschub des Werkstücks (5) bzw. des Förderers (11) erfolgen. Die in Förderrichtung (13) vorderen und hinteren Hubeinrichtungen (12) können ferner gleich bzw. synchron oder unterschiedlich gesteuert werden und dementsprechend gleiche oder unterschiedliche Hubbewegungen ausführen.

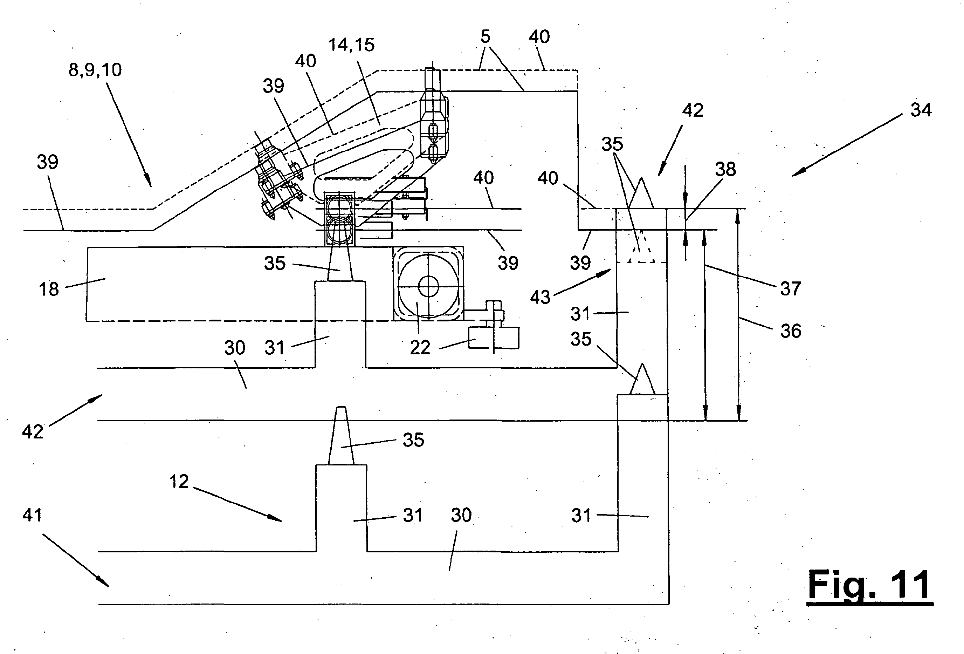

Die Hubeinrichtungen (12) können konstruktiv in beliebig geeigneter Weise ausgebildet sein. Sie können ein oder mehrere, einzeln oder gemeinsam bewegliche und steuerbar angetriebene Hubelemente (31) mit Aufnahmeelementen (35) zum definierten und vorzugsweise formschlüssigen Eingriff an Aufnahmestellen des Werkstücks (5) und/oder des Werkstückträgers (14) aufweisen. Die Aufnahmeelemente (35) können am oberen Ende der Hubelemente (31) angeordnet sein und als Zentrier- und Positionierelemente, z.B. als Kegel, Schalen oder dgl., ausgebildet sein. Figur 11 zeigt eine beispielhafte Ausbildung.

Die Hubeinrichtungen (12) können z.B. aus einzelnen, ausfahrbaren Hubstempeln (31) bestehen, die eine eigenständige Hubbewegung, z.B. ein vertikales Heben und Senken, ausführen. Hierbei können die in einem Paar beidseits der Förderlinie angeordneten Hubstempel (31) in ihren Bewegungen gekoppelt sein. Auch die vorderen und hinteren Hubstempel (31) oder Hubstempelpaare können gleich bzw. synchron oder voneinander unabhängig gesteuert werden. Eine eigenständige Steuerung und Antriebstechnik bieten die Möglichkeit, auf evtl. Störkonturen des Werkstücks (5), z.B. nach unten in den Hubweg ragende Werkstückteile, Rücksicht zu nehmen.

Derartige Hubstempel (31) oder andere Arten von Hubelementen können konstruktiv in unterschiedlicher Weise ausgebildet sein. Hierfür eignen sich z.B. Spindelantriebe mit einem steuerbaren Elektromotor, hydraulische oder pneumatische Zylinder oder dgl. mit entsprechender Steuerung.

Figur 10 zeigt eine Variante, in der die Hubeinrichtungen (12) als Hubtische (30) ausgebildet sind, die sich unterhalb der Förderer (11) und der Förderbahn befinden. Die Hubtische (30) haben z.B. eine Rechteckform und weisen an den Ecken vier z.B. starre Hubelemente oder Hubarme (31) auf, die vertikal nach oben ragen. Der Hubtisch (30) hat einen steuerbaren Antrieb (nicht dargestellt), der die Tischplatte mit den Hubarmen (31) hebt und senkt.

Die Hubeinrichtungen (12) bewegen sich gemäß Figur 11 in einer Hubbewegung (36) zwischen einer zurückgezogenen Ruhestellung (41) und einer ausgefahrenen Hub- oder Positionierstellung (42). Sie dienen einerseits zum Abheben und Lösen der Werkstücke (5) vom Förderer (11) in deren Transportstellung (39). Sie dienen andererseits zur Positionierung der Werkstücke (5) in der Endlage (42) der Hubbewegung und der angehobenen Werkstück-Stellung (40). Die Hubeinrichtungen (12) stellen zugleich eine Positioniereinrichtung dar. Sie haben hierfür geeignete Hubelemente (31) nebst Aufnahmeelementen (35), die in definierter Weise am Werkstück (5) und/oder am Werkstückträger (14) bzw. an den Stützbügeln (15) angreifen und diese in exakter und definierter Weise aufnehmen. Am Ende der genau steuerbaren Hubbewegung ist das Werkstück (5) korrekt positioniert und kann in dieser Stellung fixiert, z.B. mit der Spanneinrichtung gespannt und anschließend bearbeitet oder behandelt werden.

Bei der nachfolgenden Senkbewegung der Hubeinrichtungen (12) werden die Werkstücke (5) zu den Förderern (11) zurückbewegt und an diese zum Weitertransport übergeben, wobei sich die Hubeinrichtungen (12) von den Werkstücken (5) lösen.

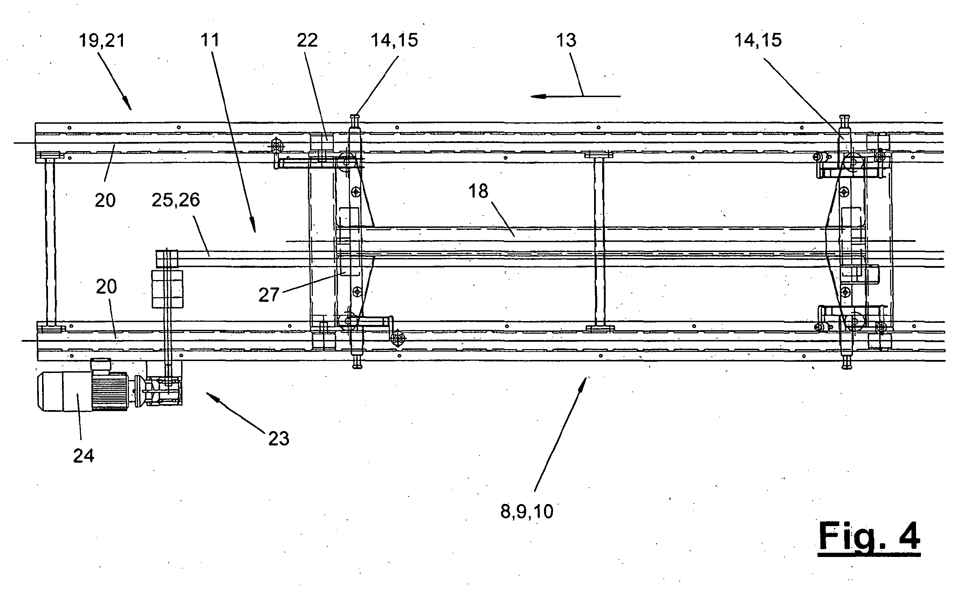

Figur 1 und 2 verdeutlichen schematisch die Transportkinematik mit vier Karosserien (5), die zur Kennung mit den Buchstaben A,B,C und D bezeichnet sind. In Station (3) ist außerdem die Hubbewegung des Werkstücks (5) mit durchgezogener und gestrichelter Darstellung der Karosseriekontur dargestellt. Figur 3 und 4 zeigen auch die Unterschiede mit einer direkten Auflage der Karosserie (5) auf dem Förderer (11) in Station (3) und einer Karosserieanordnung auf einem Werkstückträger (14) bzw. Stützbügeln (15) in Station (4). Die Hubeinrichtungen (12) sind der Übersicht halber durch Pfeile symbolisiert. Die Transporteinheit (7) bedient die Werkstückzuführung (6) und die erste Station (2). Für den Transport nimmt sie mit ihrem Transportelement (18) das Werkstück (A) auf und bewegt es in Förderrichtung (13) vorwärts zur Aufnahme- und Abgabestelle (34) in der anschließenden Station (2). Die anschließende Transporteinheit (9) nimmt dabei im wesentlichen gleichzeitig das in der Station (2) befindliche Werkstück (B) auf und transportiert es in die Folgestation (3). In gleicher Weise geschieht der Vorschub des dortigen Werkstücks (C) in die Station (4) mit der dritten Transporteinheit (10) usw..

Der Vorschub aller Transporteinheiten (8,9,10) erfolgt im wesentlichen zeitgleich, wobei im Einzelfall Unterschiede im zeitlichen Beginn und Ende und in der Geschwindigkeit der Vorschubbewegung zwischen den Transporteinheiten (8,9,10) bestehen können. Am Ende der Vorschubbewegung werden die Werkstücke (A,B,C,D) an den Aufnahme- und Abgabestellen (34) von den ein oder mehreren Hubeinrichtungen (12) aufgenommen, angehoben und vom Förderer (11) gelöst. Dieser kann anschließend in einer Rückwärtsbewegung in seine Ausgangsstellung zurückkehren und ist dann für den nächsten Förderschritt bereit. Am Taktende senken die Hubeinrichtungen (12) die Werkstücke (A,B,C,D) wieder ab und übergeben sie dabei an den zurückgekehrten Förderer (11) bzw. dessen Transportelement (18) der folgenden Transporteinheit (9,10) für den erneuten Vorschub und Weitertransport in die Folgestation.

Die Hubeinrichtungen (12) können in der eingangs erwähnten Weise in Abhängigkeit vom Vorschub der Werkstücke (5) gesteuert und bewegt werden. Hierfür ist eine Messeinrichtung (28) vorgesehen, die unterschiedlich ausgebildet sein kann und ggf. mehrere Teile besitzen kann. Die Messeinrichtung (28) erfasst den Vorschub der Werkstücke (5). Dies kann auf unterschiedliche Weise geschehen. Einerseits kann über Weggeber, Taster oder dgl. der tatsächliche Vorschub des Werkstücks (5) oder des Transportelements (18) erfasst werden. Dies kann z.B. eine laufende Positionserfassung sein. Alternativ oder zusätzlich ist eine Vorschubermittlung über den Antrieb (23) des Förderers (11) möglich. Hierfür ist z.B. ein Weggeber im Motor (24) oder in der Riemenführung (26) angeordnet, der den vom Motor (24) oder dem Antriebselement (25) zurückgelegten Weg erfasst. Dies kann in Abhängigkeit von der Zeit geschehen. Mit der Messeinrichtung (28) kann hierdurch vom Vorschub nicht nur die aktuelle Position, sondern auch die Geschwindigkeit ermittelt werden.

Die Vorschubbewegung bzw. deren Geschwindigkeit kann eine Rampenform mit einem Beschleunigungsabschnitt, einem im wesentlichen konstanten Fahrabschnitt und einem endseitigen Bremsabschnitt aufweisen. Dies gilt zumindest für die Vorwärtsbewegung. Die Rückwärtsbewegung kann entsprechend ausgeführt werden. Der Vorschub kann alternativ mit einer anderen Kurvenform erfolgen, wobei z.B. auch zwischen den Beschleunigungs- und Bremsphasen die Geschwindigkeit geändert wird. Die Antriebe (23) sind bevorzugt auf hohe Beschleunigungen und Geschwindigkeiten ausgelegt und können die Transportelemente (18) schneller als bei einem konventionellen Shuttle-Förderer zumindest in Vorwärtsrichtung bewegen. Die Rückwärtsbewegung kann langsamer sein, weil hierfür mehr Zeit zur Verfügung steht.

Die Hubeinrichtungen (12) können in unterschiedlicher Weise und in Abhängigkeit vom Vorschub gesteuert werden. Sie führen einen Hub oder Hubweg (36) aus, der einteilig sein kann oder sich ggf. in mehrere Abschnitte, insbesondere in einen Leerhub (37) und einen Resthub (38) gliedern kann. Der Leerhub (37) kann größer als der Resthub oder Positionierhub (38) sein. Die Hubbewegung (36) kann unterbrechungsfrei sein oder einen Stop am Ende des Leerhubs (37) aufweisen. Die Hubgeschwindigkeit kann steuerbar sein, wobei sie abgesehen von Beschleunigungs- und Bremsphasen konstant oder variabel sein kann.

Beispielsweise kann ein Werkstück (5) Störkonturen für den Hubweg (36) haben, die in einem bestimmten Bezug zur Werkstücklage auf dem Transportelement (18) und damit zum Vorschub stehen. Die Hubbewegung (36) kann in Abhängigkeit vom Vorschub derart gesteuert werden, dass sie bis zum Eintreffen der Störkontur gebremst oder unterbrochen anschließend fortgesetzt und ggf. beschleunigt wird. Die Hubeinrichtungen (12) können ebenfalls eine Messeinrichtung (28) für die Positions-, Weg- und Geschwindigkeitserfassung der Hubelemente aufweisen.

Ferner ist es möglich, die Hubbewegung und den Vorschub gegenseitig zu überlagern, so dass z.B. ein Großteil der Hubbewegung als Leerhub (37) bis zum Ende des Vorschubs ausgeführt ist. Am Ende des Vorschubs und bei Erreichen der Aufnahme- und Abgabestelle (34) brauchen die Hubeinrichtungen (12) nur noch einen kleinen Resthub (38) zum Aufnehmen und Lösen des Werkstücks (5) vom Förderer (11) sowie zum Positionieren auszuführen.

Mit dem Leerhub (37) nähert die Hubeinrichtung (12) die ein oder mehreren Werkstück-Aufnahmeelemente (35) der Übernahmestelle (43) und der Transportstellung oder Transporthöhe (39) des Werkstücks (5) und/oder des Werkstückträgers (14) an. Bei der Werkstückübernahme und beim Resthub (38) ist der Vorschub vorzugsweise beendet und der Förderer (11) steht still. Am Hubende nimmt das Werkstück (5) und/oder der Werkstückträger (14) die in Figur 11 gezeigte angehobene oder ausgehobene Stellung (40) ein.

Der Resthub (38) unter Mitnahme des Werkstücks (5) kann beispielsweise 5 bis 30 mm betragen. Im gezeigten Ausführungsbeispiel hat der Resthub eine Länge von ca. 10 mm. Der Gesamthub (36) der Hubeinrichtungen (12) hängt von den örtlichen Gegebenheiten ab. Er kann z.B. 300 mm bis 400 mm betragen.

Die Werkstücke (5) oder die Werkstückträger (14,15) können mit dem Transportelement (18) der Förderer (11) lösbar verbunden sein. Hierfür ist eine steuerbare Koppeleinrichtung (16) vorhanden. Diese sorgt für eine geeignete und z.B. formschlüssige Verbindung, die bevorzugt auch einen genauen Lagebezug zwischen dem Werkstück (5) bzw. Werkstückträger (14,15) und dem Förderer (11) herstellt. Die Koppeleinrichtung (16) kann für den Vorschub die besagte formschlüssige Verbindung und Mitnahmefunktion herstellen, wobei diese am Ende der Vorschubbewegung in geeigneter Weise und z.B. automatisch, wieder gelöst wird, sodass das Transportelement (18) störungsfrei in die Ausgangsstellung zurückkehren und das Transportelement (18) des nächsten Förderers (11) zur Werkstückübernahme bereit gestellt werden kann. Die Bewegung zum An- und Abkoppeln des Werkstücks (5) oder des Werkstückträgers (14,15) kann auf die Hubbewegung und insbesondere den vorerwähnten Resthub abgestimmt sein.

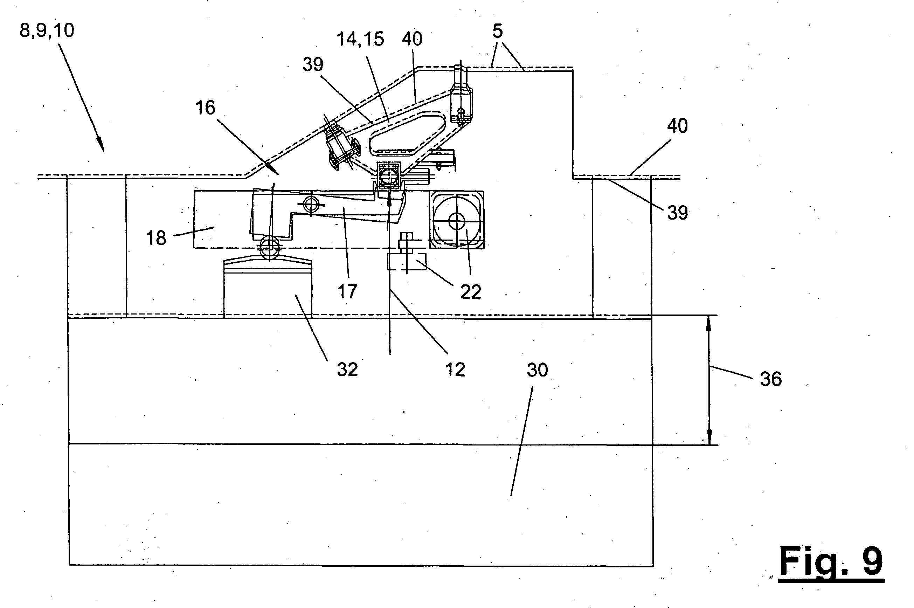

Die Koppeleinrichtung (16) kann in beliebig geeigneter Weise konstruktiv ausgebildet sein. Im gezeigten Ausführungsbeispiel von Figur 6 bis 9 wird die Koppeleinrichtung (16) z.B. von einem beweglichen und insbesondere schwenkbaren Riegel (17) gebildet, der eine abgewinkelte Hebelform hat. Am einen Ende ist eine gabelförmige Klaue vorhanden, die in formschlüssigen Eingriff mit dem Werkstückträger (14), hier z.B. mit der Querstange des Stützbügels (15) tritt. Die Klauenlänge oder Gabelhöhe kann größer als der besagte Resthub sein. Der Riegel (17) ist in seinem mittleren Bereich über ein Schwenklager drehbar am Transportelement (18) angeordnet und weist am anderen Hebelende ein Steuerelement, z.B. eine Angleitkufe auf, die mit einem Betätigungselement (32) zusammenwirkt.

Der Riegel (17) kann durch Eigengewicht und entsprechende Verteilung der Hebelmassen oder Hebelarme oder durch äußeren Einfluss, z.B. durch eine Feder oder dgl., die in Figur 7 gezeigte Ausgangs- und Transportstellung einnehmen, in der die Klaue formschlüssig mit dem Werkstück (5) oder Werkstückträger (14) verbunden ist. Das Betätigungselement (32) kann sich an der Hubeinrichtung (12) befinden und z.B. an einem Hubelement (31) angeordnet sein. Es wird von diesem bei der Hubbewegung mitgeführt und wirkt auf das Steuerelement bzw. die Angleitkufe am Ende des Vorschubs ein. Hierdurch wird der Riegel (17) in die in Figur 8 gezeigte Freigabestellung gedreht, wobei der Drehweg größer als der Resthub sein kann. In dieser Stellung ist der Eingriff mit dem Werkstück (5) oder Werkstückträger (14,15) gelöst, sodass eine anschließende kollisionsfreie Rückwärtsbewegung des Förderers (11) und des Riegels (17) möglich ist. Die Angleitfläche oder das Steuerelement kann dabei eine entsprechende Ausbildung und Länge haben, um die abgeschwenkte Lösestellung beizubehalten, bis die Klaue oder Gabel sich hinter dem angehobenen Werkstück (5) oder Werkstückträger (14,15) befindet. Bei der Rückwärtsbewegung löst sich der Riegel (17) vom Betätigungselement (32) und nimmt selbsttätig wieder seine Ausgangsstellung ein, sodass am Ende der Rückwärtsbewegung das abgesenkte Werkstück (5) oder der Werkstückträger (14,15) wieder formschlüssig mit dem bereitstehenden Riegel (17) verrastet werden kann. Für die beschriebene Koppeleinrichtung (16) genügt ein einzelner Riegel (17) und ein einzelnes Betätigungselement (32).

Abwandlungen der gezeigten und beschriebenen Ausführungsformen sind in verschiedener Weise möglich. Die Messeinrichtung (28) kann auch einen der oder den Hubeinrichtung(en) (12) zugeordneten Teil haben und deren Weg, Zeit und/oder Geschwindigkeit erfassen. Hierüber kann eine Lage- und Funktionskontrolle erfolgen. Außerdem ist dies günstig für eine exakte gegenseitige Abstimmung der Vorschub- und Hubbewegung.

Die Zahl und Anordnung der Hubeinrichtungen (12) kann variieren. Beispielsweise können drei oder mehr Hubeinrichtungen (12) vorhanden sein. Ferner können die Hubeinrichtungen (12) in Förderrichtung (13) reversierend beweglich sein und ggf. am Ende der Vorschubbewegung ein Stück mitfahren, wobei der Resthub (38) während der Mitfahrbewegung ausgeführt wird. Die Hubeinrichtungen (12) können ferner Bestandteile einer Positioniereinrichtung für die Werkstücke (5) sein, wobei sie z.B. mit stationären Positionieranschlägen zusammenwirken, gegen die sie die Werkstücke (5) am Hubende drücken. In weiterer Abwandlung kann eine separate Positioniereinrichtung vorhanden sein.

Verändert werden kann auch die Ausbildung der Koppeleinrichtung (16). Diese kann z.B. aus einem elektrisch gesteuerten formschlüssigen Riegelelement mit Antrieb bestehen. Auch die konstruktive Ausbildung der Transporteinheiten (8,9,10) und deren Förderer (11) kann konstruktiv abgewandelt werden. Außerdem ist es möglich, die in den gezeigten und beschriebenen Ausführungsbeispielen enthaltenen Merkmale beliebig untereinander zu vertauschen und zu kombinieren.

### BEZUGSZEICHENLISTE

- 1: Bearbeitungsanlage
- 2: Bearbeitungsstation
- 3: Bearbeitungsstation
- 4: Bearbeitungsstation
- 5: Werkstück, Karosserieteil
- 6: Werkstückzuführung
- 7: Transporteinrichtung
- 8: Transporteinheit, Shuttleeinheit
- 9: Transporteinheit, Shuttleeinheit
- 10: Transporteinheit, Shuttleeinheit
- 11: Förderer
- 12: Hubeinrichtung
- 13: Förderrichtung
- 14: Werkstückträger
- 15: Stützbügel
- 16: Koppeleinrichtung
- 17: Riegel
- 18: Transportelement, Schlitten
- 19: Führung
- 20: Schienenanordnung
- 21: Führungsbahn, Schienenbahn
- 22: Laufwerk
- 23: Antrieb
- 24: Motor
- 25: Antriebselement, Zahnriemen
- 26: Riemenführung
- 27: Verbindung
- 28: Messeinrichtung
- 29: Steuerung
- 30: Hubtisch
- 31: Hubelement, Hubarm, Hubstempel
- 32: Betätigungselement
- 33: Bearbeitungseinrichtung
- 34: Aufnahme- und Abgabestelle
- 35: Aufnahmeelement, Positionierelement
- 36: Hub, Gesamthub
- 37: Leerhub
- 38: Resthub, Positionierhub
- 39: Transportstellung, Transporthöhe
- 40: angehobene Stellung
- 41: Ruhestellung
- 42: Endstellung, Positionierstellung
- 43: Übernahmestellung

## Patentansprüche

1. Transporteinrichtung für den schrittweisen Transport von Werkstücken (5) mit einer Vorschub- und Hubbewegung, wobei die Transporteinrichtung (7) einen reversierenden Förderer (11) für den Vorschub der Werkstücke (5) und eine separate, an den Werkstücken (5) angreifende Hubeinrichtung (12) zum Bewegen und Lösen der Werkstücke (5) vom Förderer (11) aufweist, **dadurch gekennzeichnet, dass** die Transporteinrichtung (7) mehrere in Förderrichtung (13) hintereinander angeordnete eigenständige Transporteinheiten (8,9,10) aufweist, die jeweils einen reversierenden Förderer (11) für den Vorschub und mindestens eine separate Hubeinrichtung (12) aufweisen.

2. Transporteinrichtung nach Anspruch 1, **dadurch gekennzeichnet, dass** der Hub (36) der Hubeinrichtung (12) mehrere Abschnitte aufweist, insbesondere einen Leerhub (37) zur Annäherung und einen Resthub (38) zum Aufnehmen und Positionieren des Werkstücks (5), wobei der Hub (36) der Hubeinrichtung (12) und der Vorschub des Förderers (11) einander überlagern, wobei die Hubeinrichtung (12) die Hubbewegung als Leerhub (37) vor Beendigung des Vorschubs startet.

3. Transporteinrichtung nach Anspruch 1 oder 2, **dadurch gekennzeichnet, dass** benachbarte Transporteinheiten (8,9,10) einander überlappend angeordnet sind.

4. Transporteinrichtung nach Anspruch 1, 2 oder 3, **dadurch gekennzeichnet, dass** benachbarte Transporteinheiten (8,9,10) gemeinsame Abgabe- und Aufnahmestellen (34) für Werkstücke (5) aufweisen und die Transporteinheiten (8,9,10) in gegenseitig abgestimmter Weise gesteuert sind.

5. Transporteinrichtung nach einem der vorhergehenden Ansprüche, **dadurch gekennzeichnet, dass** die Transporteinheit (8,9,10) an den Enden des Förderers (11) stationär und neben dem Förderer (11) angeordnete Hubeinrichtungen (12) aufweist, die als Positioniereinrichtung oder als Teil einer Positioniereinrichtung für die Werkstücke (5) oder Werkstückträger (14) ausgebildet sind.

6. Transporteinrichtung nach einem der vorhergehenden Ansprüche, **dadurch gekennzeichnet, dass** die Transporteinheit (8,9,10) eine Messeinrichtung (28) zur Ermittlung des Vorschubs und/oder des Hubs, insbesondere des Vorschubwegs bzw. Hubwegs, aufweist.

7. Transporteinrichtung nach einem der vorhergehenden Ansprüche, **dadurch gekennzeichnet, dass** ein bevorzugt flurgebundener Förderer (11) eine steuerbare Koppeleinrichtung (16) zum Mitnehmen oder Lösen der Werkstücke (5) aufweist, wobei die Hubeinrichtung (12) ein Betätigungselement (32) für die Koppeleinrichtung (16) aufweist.

8. Transporteinrichtung nach einem der vorhergehenden Ansprüche, **dadurch gekennzeichnet, dass** ein Förderer (11) ein Transportelement (18) für das Werkstück (5) oder einen Werkstückträger (14) und einen Antrieb (23) aufweist, wobei der Förderer (11) eine Führung (19) für das Transportelement (18) aufweist.

9. Transporteinrichtung nach einem der vorhergehenden Ansprüche, **dadurch gekennzeichnet, dass** ein Transportelement (18) für das Werkstück (5) oder einen Werkstückträger (14) als Schlitten mit einem Laufwerk (22) und eine Führung (19) als Schienenanordnung (20) ausgebildet ist, wobei die Schienenanordnungen (20) benachbarter Transporteinheiten (8,9,10) fluchten und eine durchgehende Schienenbahn (21) bilden.

10. Transporteinrichtung nach einem der vorhergehenden Ansprüche, **dadurch gekennzeichnet, dass** der Antrieb (23) einen Motor (24) und ein mit einem Transportelement (18) verbundenes reversierend bewegliches Antriebselement (25) aufweist, welches als Riemen, insbesondere als Zahnriemen, mit einer Riemenführung (26) ausgebildet ist, wobei die Riemenführungen (26) benachbarter Transporteinheiten (7,8,9) seitlich versetzt nebeneinander und mit Überlappung in Förderrichtung (13) angeordnet sind.

11. Transporteinrichtung nach einem der vorhergehenden Ansprüche, **dadurch gekennzeichnet, dass** die Hubeinrichtung (12) ein oder mehrere neben dem Transportelement (18) angeordnete, gesteuert angetriebene Hubelemente (31) mit einem oder mehreren zentrierenden Aufnahmeelementen (35) für das Werkstück (5) und/oder einen Werkstückträger (14) aufweist.

12. Bearbeitungsanlage mit mehreren Bearbeitungsstationen (2,3,4) und einer Transporteinrichtung (7) für den schrittweisen Transport von Werkstücken (5) mit einer Vorschub- und Hubbewegung, **dadurch gekennzeichnet, dass** die Transporteinrichtung (7) nach mindestens einem der Ansprüche 1 bis 11 ausgebildet ist.

13. Bearbeitungsanlage nach Anspruch 12, **dadurch gekennzeichnet, dass** zwei benachbarte Transporteinheiten (8,9,10) jeweils eine Bearbeitungsstation (2,3,4) bedienen und in der Bearbeitungsstation (2,3,4) eine gemeinsame Aufnahme- und Abgabestelle (34) für die Werkstücke (5) aufweisen.

14. Verfahren zum schrittweisen Transport von Werkstücken (5) mit einer Vorschub- und Hubbewegung, **dadurch gekennzeichnet, dass** die Werkstücke (5) mit einer Transporteinrichtung (7) mit mehreren in Förderrichtung (13) hintereinander angeordneten eigenständigen Transporteinheiten, die jeweils einen reversierenden Förderer (11) für den Vorschub und mindestens eine separate Hubeinrichtung (12) aufweisen, (8,9,10) transportiert werden, wobei die Werkstücke (5) an den Transporteinheiten (8,9,10) jeweils von einem reversierenden Förderer (11) vorwärts bewegt und am Ende des Vorschubs durch mindestens eine separate, an den Werkstücken (5) angreifende Hubeinrichtung (12) mit einer Hubbewegung vom Förderer (11) gelöst werden.

15. Verfahren nach Anspruch 14, **dadurch gekennzeichnet, dass** die Hubeinrichtung (12) die Werkstücke (5) vom ruhenden Förderer (11) löst und positioniert und die Hubbewegung als Leerhub (37) vor Beendigung des Vorschubs startet.

## Claims

1. Conveying installation for incrementally conveying workpieces (5) by way of an indexing and lifting motion, wherein the conveying installation (7) has a reversing conveyor (11) for indexing the workpieces (5) and a separate lifting installation (12), which engages on the workpieces (5), for moving and releasing the workpieces (5) from the conveyor (11), **characterized in that** the conveying installation (7) has a plurality of autonomous conveying units (8, 9, 10) which are disposed behind one another in the conveying direction (13) and which in each case have a reversing conveyor (11) for indexing and at least one separate lifting installation (12).

2. Conveying installation according to Claim 1, **characterized in that** the stroke (36) of the lifting installation (12) has a plurality of portions, in particular a dead stroke (37) for approaching, and a residual stroke (38) for receiving and positioning the workpiece (5), wherein the stroke (36) of the lifting installation (12) and indexing of the conveyor (11) are mutually superimposed, wherein the lifting installation (12) commences the lifting motion as a dead stroke (37) prior to termination of indexing.

3. Conveying installation according to Claim 1 or 2, **characterized in that** adjacent conveying units (8, 9, 10) are disposed so as to mutually overlap.

4. Conveying installation according to Claim 1, 2, or 3, **characterized in that** adjacent conveying units (8, 9, 10) have common drop-off and pick-up points (34) for workpieces (5), and the conveying units (8, 9, 10) are controlled in a mutually adapted manner.

5. Conveying installation according to one of the preceding claims, **characterized in that** the conveying unit (8, 9, 10) has lifting installations (12) which are disposed on the ends of the conveyor (11) in a stationary manner and beside the conveyor (11) and which are configured as a positioning installation or as part of a positioning installation for the workpieces (5) or workpiece carriers (14).

6. Conveying installation according to one of the preceding claims, **characterized in that** the conveying unit (8, 9, 10) has a measuring installation (28) for determining indexing and/or lifting, in particular the indexing distance or lifting distance, respectively.

7. Conveying installation according to one of the preceding claims, **characterized in that** a preferably floor-linked conveyor (11) has a controllable coupling installation (16) for entraining or releasing the workpieces (5), wherein the lifting installation (12) has an actuation element (32) for the coupling installation (16).

8. Conveying installation according to one of the preceding claims, **characterized in that** a conveyor (11) has a conveying element (18) for the workpiece (5), or a workpiece carrier (14) and a drive (23), wherein the conveyor (11) has a guide (19) for the conveying element (18).

9. Conveying installation according to one of the preceding claims, **characterized in that** a conveying element (18) is configured as a slide having a running gear (22) and a guide (19) as a rail assembly (20) for the workpiece (5) or a workpiece carrier (14), wherein the rail assemblies (20) of adjacent conveying units (8, 9, 10) are mutually aligned and form a continuous rail track (21).

10. Conveying installation according to one of the preceding claims, **characterized in that** the drive (23) has a motor (24) and a drive element (25) which is connected to a conveying element (18) and is movable in a reversing manner and which is configured as a belt, in particular as a timing belt, having a belt guide (26), wherein the belt guides (26) of adjacent conveying units (7, 8, 9) are disposed beside one another so as to be laterally offset, having an overlap in the conveying direction (13).

11. Conveying installation according to one of the preceding claims, **characterized in that** the lifting installation (12) has one or a plurality of lifting elements (31) which is/are disposed beside the conveying element (18) and is/are controllably driven, having one or a plurality of centring receiving elements (35) for the workpiece (5) and/or a workpiece carrier (14).

12. Processing system having a plurality of processing stations (2, 3, 4) and a conveying installation (7) for incremental conveying of workpieces (5) by way of an indexing and lifting motion, **characterized in that** the conveying installation (7) is configured according to at least one of Claims 1 to 11.

13. Processing system according to Claim 12, **characterized in that** two adjacent conveying units (8, 9, 10) in each case serve one processing station (2, 3, 4) and in the processing station (2, 3, 4) have a common pick-up and drop-off point (34) for the workpieces (5).

14. Method for incrementally conveying workpieces (5) by way of an indexing and lifting motion, **characterized in that** the workpieces (5) are conveyed by a conveying installation (7) having a plurality of autonomous conveying units (8, 9, 10) which are disposed behind one another in the conveying direction (13) and which in each case have a reversing conveyor (11) for indexing and at least one separate lifting installation (12), wherein the workpieces (5) on the conveying units (8, 9, 10) are in each case moved forward by a reversing conveyor (11) and at the end of indexing are released from the conveyor (11) by way of a lifting motion by at least one separate lifting installation (12) which engages on the workpieces (5).

15. Method according to Claim 14, **characterized in that** the lifting installation (12) releases and positions the workpieces (5) from the stationary conveyor (11), and commences the lifting motion as a dead stroke (37) prior to termination of indexing.

## Revendications

1. Dispositif de transport pour le transport pas à pas de pièces (5) avec un mouvement d'avance et un mouvement de levage, le dispositif de transport (7) présentant un transporteur réversible (11) pour l'avance des pièces (5) et un dispositif de levage séparé (12) venant en prise avec les pièces (5) pour déplacer et détacher les pièces (5) du transporteur (11), **caractérisé en ce que** le dispositif de transport (7) présente plusieurs unités de transport autonomes (8, 9, 10) disposées les unes derrière les autres dans la direction de transport (13), lesquelles présentent à chaque fois un transporteur réversible (11) pour l'avance et au moins un dispositif de levage séparé (12).

2. Dispositif de transport selon la revendication 1, **caractérisé en ce que** la course de levage (36) du dispositif de levage (12) présente plusieurs sections, en particulier une course à vide (37) pour le rapprochement et une course de repos (38) pour recevoir et positionner la pièce (5), la course de levage (36) du dispositif de levage (12) et l'avance du transporteur (11) étant superposées l'une à l'autre, le dispositif de levage (12) commençant le mouvement de levage en tant que course à vide (37) avant la fin de l'avance.

3. Dispositif de transport selon la revendication 1 ou 2, **caractérisé en ce que** des unités de transport adjacentes (8, 9, 10) sont disposées de manière à se chevaucher mutuellement.

4. Dispositif de transport selon la revendication 1, 2 ou 3, **caractérisé en ce que** des unités de transport adjacentes (8, 9, 10) présentent des zones de dépose et de réception communes (34) pour des pièces (5) et les unités de transport (8, 9, 10) sont commandées de manière adaptée mutuellement.

5. Dispositif de transport selon l'une quelconque des revendications précédentes, **caractérisé en ce que** l'unité de transport (8, 9, 10) présente aux extrémités du transporteur (11) des dispositifs de levage (12) disposés de manière stationnaire et à côté du transporteur (11), lesquels sont réalisés en tant que dispositif de positionnement ou sous forme de partie d'un dispositif de positionnement pour les pièces (5) ou des supports de pièces (14).

6. Dispositif de transport selon l'une quelconque des revendications précédentes, **caractérisé en ce que** l'unité de transport (8, 9, 10) présente un dispositif de mesure (28) pour déterminer l'avance et/ou la course de levage, en particulier la distance d'avance ou la distance de levage.

7. Dispositif de transport selon l'une quelconque des revendications précédentes, **caractérisé en ce qu'**un transporteur (11) de préférence au sol présente un dispositif de couplage commandable (16) pour entraîner ou détacher les pièces (5), le dispositif de levage (12) présentant un élément d'actionnement (32) pour le dispositif de couplage (16).

8. Dispositif de transport selon l'une quelconque des revendications précédentes, **caractérisé en ce qu'**un transporteur (11) présente un élément de transport (18) pour la pièce (5) ou un support de pièce (14) et un entraînement (23), le transporteur (11) présentant un guide (19) pour l'élément de transport (18).

9. Dispositif de transport selon l'une quelconque des revendications précédentes, **caractérisé en ce qu'**un élément de transport (18) pour la pièce (5) ou un support de pièce (14) est réalisé sous forme de chariot avec un châssis de roulement (22) et un guide (19) en tant qu'agencement de rail (20), les agencements de rail (20) d'unités de transport adjacentes (8, 9, 10) étant en affleurement et formant une voie ferrée continue (21).

10. Dispositif de transport selon l'une quelconque des revendications précédentes, **caractérisé en ce que** l'entraînement (23) présente un moteur (24) et un élément d'entraînement (25) mobile de manière réversible, connecté à un élément de transport (18), qui est réalisé sous forme de courroie, en particulier sous forme de courroie dentée, avec un guide à courroie (26), les guides à courroie (26) d'unités de transport adjacentes (7, 8, 9) étant disposés de manière décalée latéralement les uns à côté des autres et avec un chevauchement dans la direction de transport (13).

11. Dispositif de transport selon l'une quelconque des revendications précédentes, **caractérisé en ce que** le dispositif de levage (12) présente un ou plusieurs éléments de levage (31) entraînés de manière commandée, disposés à côté de l'élément de transport (18), avec un ou plusieurs éléments de réception de centrage (35) pour la pièce (5) et/ou un support de pièce (14).

12. Installation d'usinage comprenant plusieurs postes d'usinage (2, 3, 4) et un dispositif de transport (7) pour le transport pas à pas de pièces (5) avec un mouvement d'avance et un mouvement de levage, **caractérisée en ce que** le dispositif de transport (7) est réalisé selon au moins l'une quelconque des revendications 1 à 11.

13. Installation d'usinage selon la revendication 12, **caractérisée en ce que** deux unités de transport adjacentes (8, 9, 10) commandent à chaque fois un poste d'usinage (2, 3, 4) et présentent dans le poste d'usinage (2, 3, 4) une zone de réception et de dépose (34) commune pour les pièces (5).

14. Procédé pour le transport pas à pas de pièces (5) avec un mouvement d'avance et un mouvement de levage, **caractérisé en ce que** les pièces (5) sont transportées avec un dispositif de transport (7) comprenant plusieurs unités de transport autonomes (8, 9, 10) disposées les unes derrière les autres dans la direction de transport (13), lesquelles présentent à chaque fois un transporteur réversible (11) pour l'avance et au moins un dispositif de levage séparé (12), les pièces (5) étant déplacées au niveau des unités de transport (8, 9, 10) vers l'avant à chaque fois par un transporteur réversible (11) et, à la fin de l'avance, étant détachées du transporteur (11) avec un mouvement de levage par au moins un dispositif de levage séparé (12) venant en prise avec les pièces (5).

15. Procédé selon la revendication 14, **caractérisé en ce que** le dispositif de levage (12) détache les pièces (5) du transporteur au repos (11) et les positionne et le mouvement de levage commence en tant que course à vide (37) avant la fin de l'avance.
